Europäisches Patentamt

European Patent Office

Office européen des brevets

(19)

(11) Veröffentlichungsnummer: **0 326 123**
**A2**

(12) **EUROPÄISCHE PATENTANMELDUNG**

(21) Anmeldenummer: 89101322.9

(22) Anmeldetag: 26.01.89

(51) Int. Cl.⁴: **B60C 9/18**

(30) Priorität: 28.01.88 DE 3802503

(43) Veröffentlichungstag der Anmeldung:
02.08.89 Patentblatt 89/31

(84) Benannte Vertragsstaaten:
AT BE CH DE ES FR GB GR IT LI LU NL SE

(71) Anmelder: Continental AG
Königsworther Platz 1 Postfach 1 69
D-3000 Hannover 1(DE)

(72) Erfinder: Rohde, Dieter
Windmühlenstrasse 4
D-3160 Lehrte(DE)

(74) Vertreter: Schneider, Egon
Königsworther Platz 1
D-3000 Hannover 1(DE)

(54) **Fahrzeugluftreifen.**

(57) Die Erfindung betrifft einen Fahrzeugluftreifen, insbesondere für Nutzfahrzeuge, mit einer Radialkarkasse, deren Festigkeitsträger aus Stahl oder einem Material ähnlich hoher Festigkeit bestehen und deren Enden in den Wülsten durch Umschlingen zugfester Wulstkerne verankert sind, mit einem mittigen Laufstreifen und mit zurückspringenden Seitenabschnitten, weiterhin mit einem mehrlagigen Gürtel, der seitlich bis in die Seitenabschnitte hineinreicht, dessen Festigkeitsträger aus Stahl oder einem Material ähnlich hoher Festigkeit bestehen und zwischen dessen Lagen sich eine dämpfungsarme Gummischicht befinden kann. Um eine weitere Rollwiderstandsverminderung zu erzielen, wird vorgeschlagen, daß sich zwischen der radial inneren Lage des Gürtels und der Radialkarkasse eine Gummiplatte aus einem weichen, dämpfungsarmen Gummi befindet, daß die Shorehärte der Gummiplatte zwischen 50 und 65 Shore A liegt und daß ihre Rückprallelastizität 55 bis 70% beträgt.

FIG. 2

## Fahrzeugluftreifen

Die Erfindung betrifft einen Fahrzeugluftreifen, insbesondere für Nutzfahrzeuge, mit einer Radialkarkasse, deren Festigkeitsträger aus Stahl oder einem Material ähnlich hoher Festigkeit bestehen und deren Enden in den Wülsten durch Umschlingen zugfester Wulstkerne verankert sind, mit einem mittigen Laufstreifen und mit zurückspringenden Seitenabschnitten, weiterhin mit einem mehrlagigen Gürtel, der seitlich bis in die Seitenabschnitte hineinreicht, dessen Festigkeitsträger aus Stahl oder einem Material ähnlich hoher Festigkeit bestehen und zwischen dessen Lagen sich eine dämpfungsarme Gummischicht befinden kann.

Ein solcher Reifen wird ohne eine dämpfungsarme Gummischicht zwischen den Lagen des Gürtels z.B. in der DE-OS 33 13 535 und mit einer solchen z.B. in der DE-OS 34 30 501 beschrieben und hat sich in der Praxis insbesondere als Reifen für Nutzfahrzeuge bestens bewährt. Durch das Vorsehen einer Stufung im Schulterbereich und durch das seitliche Erstrecken der Gürtellagen bis in die abgestuften Abschnitte hinein sowie gegebenenfalls durch das Einbringen einer dämpfungsarmen Gummischicht zwischen den Gürtellagen wurde ein Reifen mit einem verminderten Rollwiderstand geschaffen, mit dem nicht unerhebliche Kraftstoffeinsparungen erzielt werden. Der verringerte Rollwiderstand wurde vor allem durch eine Reduzierung der Wärmebildung infolge unvermeidbarer Verformungen der Laufstreifenzone beim Fahrbetrieb erzielt. Die Gummikissen, die sich im Schulterbereich keilförmig zwischen die Gürtelenden und die Karkasse schieben, bewirken in diesem Bereich eine Entkopplung zwischen dem steifen Paket der Gürtellagen und der flexibleren Karkasse.

Aus der DE-AS 10 07 644 ist ein Fahrzeugreifen insbesondere für Flugzeuge bekannt, bei dem sich radial außen von einer achtlagigen Diagonalkarkasse aus Textilgewebe ein Gürtel aus Stahlcordgewebe und dazwischen eine nachgiebige Gummiunterlage aus einer Karkaßgummimischung befindet. Die Gürtellagen verlaufen unter 45° zur Reifenumfangsrichtung. Die Gummiunterlage dient dazu, ein Lösen des Gürtels von der Karkasse aufgrund der Starrheit des Reifens insgesamt und der daraus resultierenden Relativbewegung zwischen Laufstreifen und Karkasse zu verhindern. Die bekannte Gummiunterlage ist mindestens 2 mm und bis zu 5 mm dick.

Der Erfindung liegt die Aufgabe zugrunde, bei einem Fahrzeugluftreifen der eingangs genannten Art die Wärmebildung in der Laufstreifenzone nochmals zu verringern, ohne daß die übrigen Fahreigenschaften darunter leiden.

Diese Aufgabe wird erfindungsgemäß dadurch gelöst, daß sich zwischen der radial inneren Lage des Gürtels und der Radialkarkasse eine Gummiplatte aus einem weichen, dämpfungsarmen Gummi befindet, daß die Shorehärte der Gummiplatte zwischen 50 und 65 Shore A liegt und daß ihre Rückprallelastizität 55 bis 70 % beträgt.

Mit der Erfindung ist es gelungen, bei einem Fahrzeugreifen für Nutzfahrzeuge den Rollwiderstand nochmals zu vermindern. Durch das Aufteilen der dämpfungsarmen Gummischichten auf zwei Bereiche der Laufstreifenzone erzielt man den Vorteil einer hohen Gesamtwirkung, ohne daß es an einer Stelle zu einem zu großen Sprung zwischen dem steifen Gebilde des Gürtelpakets und der flexibleren Stahlcordkarkasse kommt.

Nachfolgend wird ein Ausführungsbeispiel der Erfindung anhand einer Zeichnung näher erläutert.

Es zeigt

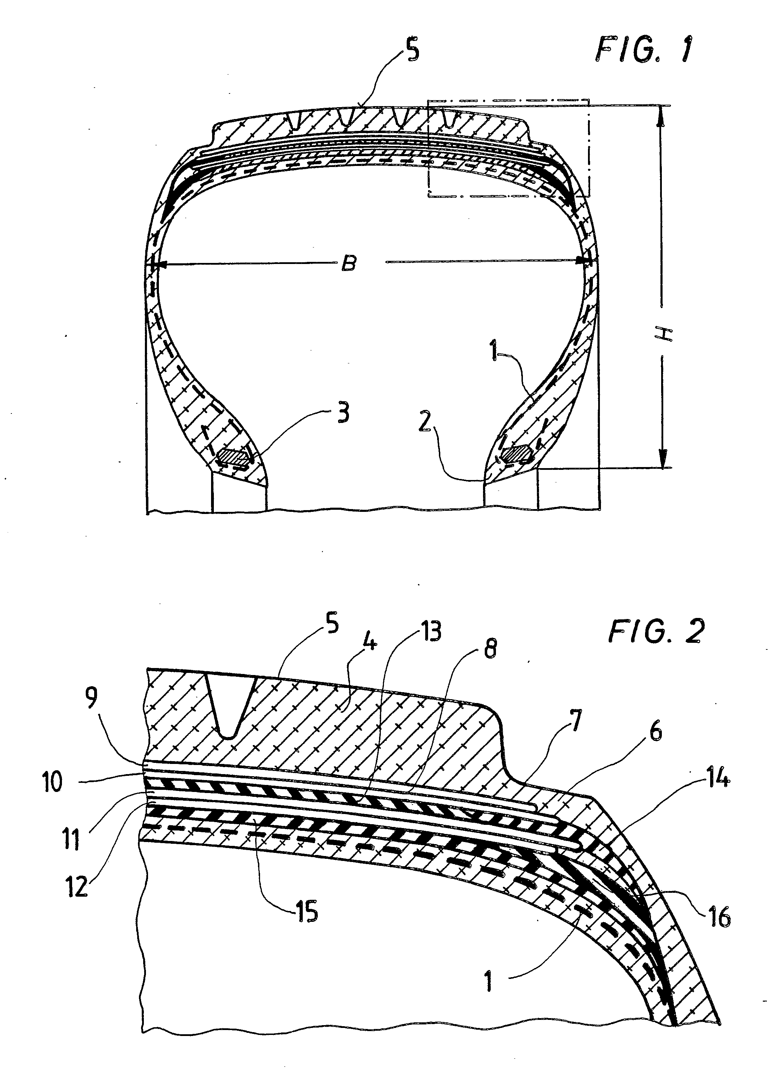

Fig. 1 einen Fahrzeugluftreifen für größere Nutzfahrzeuge in einem radialen Teilschnitt,

Fig. 2 einen vergrößerten Teilausschnitt des Reifens der Figur 1.

Der Reifenkörper besteht im wesentlichen aus Gummi oder gummiähnlichen Kunststoffen. Er ist durch Verstärkungseinlagen verfestigt, die mit dem Gummi oder dergl. durch Vulkanisation fest verbunden sind. Er weist eine Radialkarkasse 1 auf, die mit ihren Enden in den Reifenwülsten 2 durch Umschlingen von zugfesten Wusltkernen 3 verankert ist. Der Laufstreifen 4 wird nach außen durch die Lauffläche 5 und seitlich durch zwei zurückspringende Abschnitte 6 begrenzt, deren Außenflächen 7 unter Normalbedingungen nicht mit der Fahrbahn in Berührung kommen. Zwischen dem Laufstreifen 4 und der Radialkarkasse 1 befindet sich ein in Umfangsrichtung zugfester Gürtel 8 aus vier übereinanderliegenden Cordgewebelagen 9 bis 12, deren Festigkeitsträger aus Stahldrähten bzw. Kabeln oder einem Material ähnlich hoher Festigkeit, z.B. Kevlar bestehen und in jeder Lage parallel zueinander verlaufen. Vorzugsweise bilden die beiden oberen Lagen 9, 10 und die beiden unteren Lagen 11, 12 symmetrische Kreuzverbände, und ihre Festigkeitsträger schließen mit der Reifenumfangsrichtung übliche Winkel für Gürtelkonstruktionen ein. Die Gürtellagen 9 bis 12 reichen seitlich bis in die Seitenabschnitte 6 hinein. Zwischen dem radial äußeren Lagenpaar 9, 10 und dem radial inneren Lagenpaar 11, 12 des Gürtels 8 befindet sich eine Gummischicht, die von einem Mittelstreifen 13 und zwei Seitenstreifen 14 gebildet wird. Dabei reichen die Seitenstreifen 14 etwa mit ihrer halben Breite in den Zwischenraum zwischen den beiden Gürtellagenpaaren, während sie mit ihrer anderen etwa keilförmig auslaufenden Hälfte im wesentlichen parallel zur Radialkarkasse 1 im Schulterbereich verlaufen. Der Mittelstreifen 13 besitzt eine Härte Shore A zwischen 40 und 50, vorzugsweise 48. Die Härte der Seitenstreifen 14 beträgt hingegen 58 bis 80, vorzugsweise 65 bis 70 Shore A. Weiterhin besteht der Mittelstreifen 13 aus einem Gummi mit einer Rückprallelastizität von 60 bis 70% (gemessen nach DIN 53512), während die Rückprallelastizität des Seitenstreifengummis 40 bis 50% beträgt. Der Mittelstreifen 13 kann 2 bis 4 mm dick sein.

Zwischen dem radial inneren Lagenpaar 11, 12 des Gürtels 8 und der Radialkarkasse 1 befindet sich eine weitere Gummiplatte 15 aus einer weichen, dämpfungsarmen Kautschukschicht, die seitlich über die Gürtellagen hinausreicht und dort von je einem Schulterkissen 16 abgedeckt wird, das im wesentlichen aus der gleichen Gummiqualität besteht. Die Schulterkissen 16 reichen wiederum etwa zur Hälfte in den Zwischenraum zwischen Gürtel 8 und Radialkarkasse 1 bzw. Gummiplatte 15 hinein und sind außerhalb dieses Raumes nach radial innen gewölbt, um einen harmonischen Übergang zum Karkaßverlauf in diesem Bereich zu schaffen. Die Gummiplatte 15 sollte bevorzugt nicht mehr als 2 mm dick sein, kann bei großen Reifen jedoch auch geringfügig dicker gewählt sein. Die Härte der Gummiplatte 15 beträgt 50 bis 65, bevorzugt etwa ·60 Shore A. Ihre Rückprallelastizität liegt im Bereich zwischen 55 bis 70% (gemessen nach DIN 53512), bevorzugt jedoch bei 60%. Die Gummiplatte 15 ist bevorzugt auf der Basis von reinem Naturkautschuk hergestellt.

Das Herstellen der Gummiplatte 15 kann in üblicher Weise durch Spritzen oder Kalandrieren geschehen. Sie kann zur Vereinfachung der Reifenkonfektion vorab bereits durch Dublieren mit den Schulterkissen 16 zu einer Einheit verbunden werden. Da die Schulterkissen 16 häufig aus der gleichen Gummiqualität bestehen können wie die Gummiplatte 15, kann man nach bekannten Methoden auch alle drei Teile einteilig herstellen.

Die vorstehend beschriebene Reifenkonstruktion eignet sich besonders gut für Nutzfahrzeugreifen, z.B. für Lastkraftwagen und Autobusse, mit einem relativ niedrigen Höhe/Breite-Verhältnis, d.h. mit einem Verhältnis Reifenhöhe H zu Reifenbreite B von 0,8 und kleiner. Bei Bedarf kann die vorstehend beschriebene Konstruktion auch in der Weise abgewandelt sein, daß auf die Gummischicht 13 zwischen den Gürtellagenpaaren verzichtet wird.

## Ansprüche

1. Fahrzeugluftreifen, insbesondere für Nutzfahrzeuge, mit einer Radialkarkasse, deren Festigkeitsträger aus Stahl oder einem Material ähnlich hoher Festigkeit bestehen und deren Enden in den Wülsten durch Umschlingen zugfester Wulstkerne verankert sind, mit einem mittigen Laufstreifen und mit zurückspringenden Seitenabschnitten, weiterhin mit einem mehrlagigen Gürtel, der seitlich bis in die Seitenabschnitte hineinreicht, dessen Festigkeitsträger aus Stahl oder einem Material ähnlich hoher Festigkeit bestehen und zwischen dessen Lagen sich eine dämpfungsarme Gummischicht befinden kann, **dadurch gekennzeichnet,** daß sich zwischen der radial inneren Lage (12) des Gürtels (8) und der Radialkarkasse (1) eine Gummiplatte (15) aus einem weichen, dämpfungsarmen Gummi befindet, daß die Shorehärte der Gummiplatte (15) zwischen 50 und 65 Shore A liegt und daß ihre Rückprallelastizität 55 bis 70% beträgt.

2. Fahrzeugluftreifen nach Anspruch 1, dadurch gekennzeichnet, daß die Gummiplatte (15) über ihre gesamte axiale Erstreckung eine Dicke von bis zu 2 mm aufweist.

3. Fahrzeugluftreifen nach Anspruch 1, dadurch gekennzeichnet, daß die Härte der Gummiplatte (15) etwa 60 Shore A beträgt.

4. Fahrzeugluftreifen nach Anspruch 1, dadurch gekennzeichnet, daß die Rückprallelastizität der Gummiplatte (15) etwa 60% beträgt.

5. Fahrzeugluftreifen nach Anspruch 1, dadurch gekennzeichnet, daß die Gummiplatte (15) auf der Basis von reinem Naturkautschuk hergestellt ist.

FIG. 1

FIG. 2